# EUROPÄISCHE PATENTSCHRIFT

(11) **EP 2 964 528 B1**
(45) Veröffentlichungstag und Bekanntmachung des Hinweises auf die Patenterteilung: **14.11.2018**
(21) Anmeldenummer: 14707359.7
(22) Anmeldetag: 25.02.2014
(51) Int. Cl.: B64D 11/06

(54) **FLUGZEUGSITZVORRICHTUNG MIT EINER KOPFSTÜTZEINHEIT**
AIRCRAFT SEAT DEVICE HAVING A HEAD SUPPORT UNIT
ENSEMBLE SIÈGE D'AVION AVEC APPUI-TÊTE

(30) Priorität: 04.03.2013 DE 102013102111
(43) Veröffentlichungstag der Anmeldung: 13.01.2016
(73) Patentinhaber: Recaro Aircraft Seating GmbH & Co., 74523 Schwäbisch Hall (DE)
(72) Erfinder: LOHRMANN, Jochen, 71640 Ludwigsburg (DE); BICH, Christoph, 73453 Abtsgmünd (DE); SCHUMM, Andreas, 74670 Forchtenberg (DE)
(74) Vertreter: Daub, Thomas
(86) Internationale Anmeldenummer: PCT/EP2014/053614
(87) Internationale Veröffentlichungsnummer: WO 2014/135397

(56) Entgegenhaltungen:
- EP-A1- 1 580 067
- WO-A2-2007/095522
- WO-A2-2012/135245
- DE-A1-102005 030 258
- DE-A1-102009 021 267
- FR-A1- 2 876 327
- US-A1- 2004 007 910

## Beschreibung

### Stand der Technik

Die Erfindung betrifft eine Flugzeugsitzvorrichtung nach dem Oberbegriff des Patentanspruchs 1. DE 10 2005 030 258 A1 offenbart eine Sitzvorrichtung mit einem Kopfstützelement mit zwei schwenkbaren Kopfstützflügel, und mit einer aus einer Nichtgebrauchslage herausschwenkbaren Nackenstützeinheit, die zwei Flügel aufweist. DE 10 2009 021 267 A1 offenbart eine Kopfstützeinheit für einen Fahrzeugsitz, mit zwei Kopfstützflügel und einer verschiebbaren Nackenstützeinheit. FR 2 876 327 A1 offenbart eine Kopfstützeinheit mit einer schwenkbaren Nackenstützeinheit.

Die Aufgabe der Erfindung besteht insbesondere darin, eine gattungsgemäße Vorrichtung mit verbesserten Eigenschaften hinsichtlich eines Komforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Es wird eine Flugzeugsitzvorrichtung mit zumindest einer Kopfstützeinheit, die zumindest ein Kopfstützelement, das zumindest zu einer Abstützung eines Hinterkopfs eines Passagiers vorgesehen ist und zumindest eine Vertikalebene aufspannt, und zumindest eine Nackenstützeinheit aufweist, die bezüglich einer Vertikalrichtung an einem unteren Bereich des Kopfstützelements angeordnet und relativ zu dem Kopfstützelement zumindest in einer zumindest im Wesentlichen senkrecht zu der Vertikalebene ausgerichteten Bewegungsrichtung bewegbar ist, und mit zumindest einer Anbindungseinheit, die dazu vorgesehen ist, die Kopfstützeinheit zusammen mit der Nackenstützeinheit zumindest bezüglich der Vertikalrichtung beweglich an eine Rückenlehne anzubinden, vorgeschlagen.
Unter einer "Kopfstützeinheit" soll insbesondere eine Einheit mit zumindest einem Kopfstützelement und zumindest einer Nackenstützeinheit verstanden werden. Insbesondere weist die Kopfstützeinheit zumindest eine Gesamtlängserstreckung auf, die zumindest im Wesentlichen parallel zu der Vertikalrichtung ausgerichtet ist. Unter einem "Kopfstützelement" soll insbesondere ein Element verstanden werden, das in zumindest einem Gebrauchszustand zumindest eine Anlagefläche zumindest zu einer Abstützung eines Hinterkopfs eines Passagiers aufweist. Insbesondere spannt das Kopfstützelement, insbesondere eine Oberfläche des Kopfstützelements, vorteilhaft die Anlagefläche, zumindest eine Vertikalebene auf. Insbesondere weist das Kopfstützelement zumindest eine Kopfstützelementlängserstreckung auf, die zumindest im Wesentlichen parallel zu der Vertikalrichtung ausgerichtet ist. Insbesondere nimmt die Kopfstützelementlängserstreckung einen Wert in einem Bereich zwischen 50 % und 60 % der Gesamtlängserstreckung der Kopfstützeinheit an. Insbesondere nimmt die Kopfstützelementlängserstreckung einen Wert von zumindest im Wesentlichen 75 mm an. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % beträgt. Unter einer "Anlagefläche" soll insbesondere eine Oberfläche zumindest eines Bauteils, insbesondere zumindest des Kopfstützelements, verstanden werden, die zumindest in dem Gebrauchszustand in einem direkten, insbesondere flächigen Kontakt mit zumindest einem Körperteil, insbesondere einem Kopf, eines Passagiers angeordnet ist. Insbesondere sind die Anlagefläche und das Körperteil über einen Bereich von mehr als 1 cm², insbesondere von mehr als 3 cm² und vorteilhaft von mehr als 5 cm² in einem direkten Kontakt angeordnet. Unter einer "Vertikalebene" soll insbesondere eine Ebene verstanden werden, die zumindest in aufrechter Sitzstellung, in der die Rückenlehne zumindest im Wesentlichen senkrecht zu zumindest einem Boden ausgerichtet ist, zumindest im Wesentlichen senkrecht zu dem Boden ausgerichtet ist. Insbesondere ist die Vertikalebene zumindest in aufrechter Sitzstellung zumindest im Wesentlichen parallel zu der Rückenlehne ausgerichtet. Insbesondere ist die Vertikalebene zumindest in aufrechter Sitzstellung zumindest im Wesentlichen senkrecht zu einer Sitzrichtung ausgerichtet. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene bei einer Projektion auf zumindest eine Projektionsebene, in der zumindest die Gerade und/oder die Ebene angeordnet ist, einen Winkel einschließt, der vorzugsweise um weniger als 18°, vorteilhaft um weriger als 10° und insbesondere um weniger als 5° von einem Winkel von 90° abweicht. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der vorzugsweise um weniger als 18°, vorteilhaft um weniger als 10° und insbesondere umweniger als 5° von einem Winkel von 0° abweicht. Unter einer "Sitzrichtung" soll insbesondere eine Richtung verstanden werden, welche bei einem ordnungsgemäßen Sitzen eines Passagiers, insbesondere bei parallel ausgerichteten Oberschenkeln des Passagiers, im Wesentlichen der Richtung entspricht, in welcher sich die Oberschenkel des Passagiers vom Gesäß bis zum Kniebereich erstrecken. In aufrechter Stellung eines Flugzeugsitzes, in welcher die Rückenlehne zumindest im Wesentlichen senkrecht zu dem Boden ausgerichtet ist, ist die Sitzrichtung parallel zu dem Boden und zumindest im Wesentlichen senkrecht zu der von der Rückenlehne gebildeten Rückenlehnenfläche ausgerichtet. Wird die Sitzvorrichtung für einen Fluggastsitz verwendet, entspricht die Sitzrichtung typischerweise der Flugrichtung. Unter einer "Nackenstützeinheit" soll insbesondere eine Einheit verstanden werden, die in zumindest einem Gebrauchszustand zumindest eine Anlagefläche zumindest zu einer Abstützung eines Nackens eines Passagiers aufweist. Insbesondere ist die Nackenstützeinheit bezüglich der Vertikalrichtung an dem unteren Bereich des Kopfstützelements, insbesondere bezüglich der Bewegungsrichtung bewegbar, an das Kopfstützelement angebracht. Insbesondere weist die Nackenstützeinheit zumindest eine Nackenstützlängserstreckung auf, die zumindest im Wesentlichen parallel zu der Vertikalrichtung ausgerichtet ist. Insbesondere nimmt die Nackenstützlängserstreckung einen Wert in einem Bereich zwischen 40 % und 50 % der Gesamtlängserstreckung der Kopfstützeinheit an. Insbesondere nimmt die Kopfstützelementlängserstreckung einen Wert von zumindest im Wesentlichen 60 mm an. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % beträgt. Unter einer "Bewegungsrichtung" soll insbesondere eine Richtung verstanden werden, die zumindest in aufrechter Sitzstellung zumindest im Wesentlichen parallel zu der Sitzrichtung ausgerichtet ist. Unter einer "Vertikalrichtung" soll insbesondere eine Richtung verstanden werden, die zumindest in aufrechter Sitzstellung zumindest im Wesentlichen senkrecht zu dem Boden ausgerichtet ist. Insbesondere ist die Vertikalrichtung zumindest in aufrechter Sitzstellung ausgehend von dem Boden in Richtung der Kopfstützeinheit ausgerichtet. Insbesondere ist die Vertikalrichtung zumindest im Wesentlichen parallel zu der von dem Kopfstützelement aufgespannten Vertikalebene ausgerichtet. Unter einer "Anbindungseinheit" soll insbesondere eine Einheit verstanden werden, die dazu vorgesehen ist, die Kopfstützeinheit zumindest bezüglich der Vertikalrichtung beweglich an der Rückenlehne zu befestigen. Zusätzlich ist denkbar, dass die Anbindungseinheit dazu vorgesehen ist, die Kopfstützeinheit bezüglich einer Horizontalrichtung, die zumindest im Wesentlichen senkrecht zu der Vertikalrichtung und zumindest im Wesentlichen senkrecht zu der Bewegungsrichtung ausgerichtet ist, beweglich an der Rückenlehne zu befestigen. Insbesondere weist die Anbindungseinheit zumindest ein Führungselement zu einer Anbindung an die Kopfstützeinheit auf. Insbesondere weist das Führungselement zumindest ein Befestigungselement auf, das in montiertem Zustand starr an der Rückenlehne befestigt ist. Insbesondere sind das Führungselement und das Befestigungselement in montiertem Zustand aneinander gekoppelt und dazu vorgesehen, die Kopfstützeinheit bezüglich der Vertikalrichtung beweglich an die Rückenlehne anzubinden. Insbesondere ist das Führungselement relativ zu dem Befestigungselement beweglich angeordnet. Beispielweise sind das Führungselement und das Befestigungselement teleskopartig miteinander gekoppelt. Ebenfalls denkbar ist eine Ausgestaltung mittels eines Langlochs und eines in dem Langloch geführten Schlittens. Alternativ sind weitere, einem Fachmann als sinnvoll erscheinende Ausgestaltungen der Anbindungseinheit denkbar. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch eine erfindungsgemäße Ausgestaltung kann vorteilhaft ein hoher Komfort für einen Passagier erreicht werden. Zudem kann vorteilhaft eine angenehme Abstützung des Hinterkopfs des Passagiers erreicht werden. Weiterhin kann eine vorteilhaft komfortable Abstützung für einen Nacken des Passagiers erreicht werden, die an jeweilige Bedürfnisse und/oder Nackenformen des Passagiers angepasst werden kann.

Ferner wird vorgeschlagen, dass die Anbindungseinheit zumindest ein Befestigungselement zur starren Befestigung an der Rückenlehne aufweist, mit dem das Kopfstützelement einen Winkel einschließt, der, insbesondere unabhängig von einem Betriebszustand und/oder einem Verschiebungszustand der Kopfstützeinheit bezüglich der Vertikalrichtung, zumindest im Wesentlichen konstant ist. Insbesondere ist ein Winkel zwischen der von dem Kopfstützelement aufgespannten Vertikalebene und dem Befestigungselement, insbesondere unabhängig von einem Betriebszustand und/oder einem Verschiebungszustand der Kopfstützeinheit bezüglich der Vertikalrichtung, zumindest im Wesentlichen konstant. Insbesondere sind die von dem Kopfstützelement aufgespannte Vertikalebene und das Befestigungselement zumindest im Wesentlichen parallel ausgerichtet. Unter einem "zumindest im Wesentlichen konstanten" Winkel soll insbesondere ein Winkel verstanden werden, der sich, insbesondere unabhängig von einer Bewegung und/oder Position der Kopfstützeinheit relativ zu der Rückenlehne, um weniger als 5°, insbesondere um weniger als 3° und vorteilhaft um weniger als 1 ° ändert. Dadurch kann vorteilhaft eine geringe Wahrscheinlichkeit für ein Einklemmen zumindest eines Fingers eines Passagiers zwischen dem Kopfstützelement und der Rückenlehne erreicht werden, wodurch eine geringe Wahrscheinlichkeit für ein Auftreten von Finger-Pinching erreicht werden kann.

Zudem wird vorgeschlagen, dass die Kopfstützeinheit zumindest eine Gelenkeinheit zu einer schwenkbaren Lagerung der Nackenstützeinheit an dem Kopfstützelement aufweist. Unter einer "Gelenkeinheit" soll insbesondere eine Einheit verstanden werden, die dazu vorgesehen ist, die Nackenstützeinheit schwenkbar an dem Kopfstützelement zu befestigen. Beispielsweise könnte die Gelenkeinheit zumindest ein vorgespanntes Federelement zu einer schwenkbaren Lagerung der Nackenstützeinheit an dem Kopfstützelement aufweisen, wobei das Federelement beispielsweise in Abhängigkeit von einer äußeren Kraft zumindest eine Bewegung der Nackenstützeinheit in der Bewegungsrichtung erlaubt. Ebenfalls denkbar ist, dass die Gelenkeinheit zumindest ein flexibles Rohr, insbesondere ähnlich einer Schreibtischlampe, und/oder zumindest ein elastisches Material zu einer schwenkbaren Lagerung der Nackenstützeinheit an dem Kopfstützelement aufweist. Insbesondere umfasst die Gelenkeinheit zumindest ein Scharnier zu einer schwenkbaren Lagerung der Nackenstützeinheit an dem Kopfstützelement. Dadurch kann vorteilhaft die Nackenstützeinheit in einer angenehmen Weise relativ zu dem Kopfstützelement schwenkbar gelagert werden.

Weiterhin wird vorgeschlagen, dass die Kopfstützeinheit zumindest eine Fixiereinheit aufweist, die dazu vorgesehen ist, die Gelenkeinheit in zumindest zwei, insbesondere zumindest vier, vorteilhaft zumindest sechs, verschiedenen Stellungen zu fixieren. Insbesondere ist die Fixiereinheit dazu vorgesehen, die Gelenkeinheit insbesondere stufenlos einstellbar zu fixieren. Insbesondere umfasst die Gelenkeinheit zumindest ein Reibgelenk. Alternativ oder zusätzlich könnte die Gelenkeinheit zumindest ein Friktionsscharnier und/oder zumindest ein Rastscharnier aufweisen. Dadurch kann vorteilhaft eine Fixierung der Gelenkeinheit in einer Vielzahl von Stellungen erreicht werden, wodurch ein hoher Komfort und nach jeweiligen Bedürfnissen anpassbare Stellungen erreicht werden können.

Ferner wird vorgeschlagen, dass die Nackenstützeinheit zumindest eine in montiertem Zustand dem Kopfstützelement zuweisende Ausformung aufweist, die eine zumindest im Wesentlichen bogenartige Gestalt aufweist. Unter einer "zumindest im Wesentlichen bogenartigen Gestalt" zumindest eines Bauteils soll insbesondere eine Gestalt verstanden werden, die auf einer Seite zumindest einer Verbindungslinie, die zwischen zwei voneinander beabstandet angeordneten und bezüglich zumindest einer Richtung in demselben Bereich des Bauteils angeordneten Ecken des Bauteils verläuft, angeordnet und zu der Verbindungslinie beabstandet ist. Insbesondere ist ein Abstand der Gestalt von der Verbindungslinie bei 50 % plus-minus 5 % eines Betrags einer Erstreckung der Verbindungslinie zwischen den beiden Ecken maximal. Vorzugsweise weist die zumindest im Wesentlichen bogenartige Gestalt einen kontinuierlichen, stetigen Verlauf auf. Insbesondere ist der zumindest im Wesentlichen bogenartigen Gestalt in zumindest einem Teilbereich ein Radius zuordenbar. Beispielsweise weist die zumindest im Wesentlichen bogenartige Gestalt einen ovalen, elliptischen und/oder kreisförmigen Verlauf auf. Dadurch können vorteilhaft eine an einen Nacken eines Passagiers angepasste Gestalt der Nackenstützeinheit sowie ein damit verbundener hoher Komfort erreicht werden.

Zudem wird vorgeschlagen, dass die Kopfstützeinheit zumindest einen Kopfstützflügel aufweist, der in montiertem Zustand, insbesondere in aufrechter Sitzstellung, bezüglich der Vertikalrichtung mit der Nackenstützeinheit zumindest im Wesentlichen bündig abschließt. Insbesondere schließt der Kopfstützflügel in montiertem Zustand und in aufrechter Sitzstellung bezüglich der Vertikalrichtung mit dem Kopfstützelement zumindest im Wesentlichen bündig ab. Insbesondere weist der Kopfstützflügel eine in aufrechter Sitzstellung bezüglich der Vertikalrichtung im Wesentlichen parallel zu der Vertikalrichtung ausgerichtete Flügellängserstreckung auf, die zumindest im Wesentlichen gleich der Gesamtlängserstreckung der Kopfstützeinheit ist. Unter der Wendung, dass der Kopfstützflügel in montiertem Zustand bezüglich der Vertikalrichtung mit der Nackenstützeinheit "zumindest im Wesentlichen bündig" abschließt, soll insbesondere verstanden werden, dass eine gedachte Verlängerung einer seitlichen Begrenzungslinie des Kopfstützflügels und eine gedachte Verlängerung einer seitlichen Begrenzungslinie der Nackenstützeinheit zumindest im Wesentlichen parallel angeordnet sind und einen Abstand von weniger als 10 cm, insbesondere von weniger als 5 cm und vorteilhaft von weniger als 1 cm aufweisen, wobei der Abstand zumindest im Wesentlichen senkrecht zu einer jeweiligen der gedachten Verlängerungen der seitlichen Begrenzungslinien ausgerichtet ist. Dadurch kann vorteilhaft zusätzlich zu der Nackenstützeinheit eine komfortable seitliche Abstützung für den Kopf des Passagiers erreicht werden.

Weiterhin wird vorgeschlagen, dass die Kopfstützeinheit bezüglich der Vertikalrichtung um eine Strecke von mehr als 5 cm, insbesondere von mehr als 7 cm, vorteilhaft von mehr als 10 cm, bevorzugt von mehr als 12 cm und vorzugsweise von mehr als 15 cm beweglich ist. Dadurch können vorteilhaft ein großer Verfahrweg sowie ein hohes Maß an Flexibilität und Komfort erreicht werden.

Ferner wird vorgeschlagen, dass die Anbindungseinheit zumindest teilweise an dem Kopfstützelement angeordnet ist. Insbesondere weist die Anbindungseinheit zumindest zwei Kopplungselemente auf. Insbesondere ist zumindest ein erstes Kopplungselement an dem Kopfstützelement angeordnet. Insbesondere ist zumindest ein zweites Kopplungselement an dem Führungselement angeordnet. Insbesondere ist das erste Kopplungselement zu einer Kopplung mit dem zweiten Kopplungselement vorgesehen. Insbesondere ist das erste Kopplungselement, ausgehend von einem bezüglich der Vertikalrichtung oberen Bereich des Kopfstützelements, in einem Bereich zwischen 35 % und 50 %, insbesondere zwischen 40 % und 45 %, der Kopfstützelementlängserstreckung angeordnet. Insbesondere ist das erste Kopplungselement, ausgehend von dem bezüglich der Vertikalrichtung oberen Bereich des Kopfstützelements, auf einer Höhe von zumindest im Wesentlichen 30 mm angeordnet. Unter "zumindest im Wesentlichen" soll in diesem Zusammenhang insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts beträgt. Dadurch kann vorteilhaft in einfacher Weise eine sichere Anbindung der Kopfstützeinheit an die Rückenlehne erreicht werden.

Zudem wird vorgeschlagen, dass die Anbindungseinheit zumindest eine Schnellkupplung aufweist, die zu einer werkzeuglosen Anbindung der Kopfstützeinheit an das Befestigungselement vorgesehen ist. Insbesondere umfasst die Schnellkupplung zumindest die beiden Kopplungselemente. Insbesondere ist die Schnellkupplung dazu vorgesehen, die Kopfstützeinheit zumindest mittels einer Drehbewegung, insbesondere um einen Winkel von weniger als 180°, vorteilhaft von weniger als 90° und bevorzugt von weniger als 70° der Kopfstützeinheit relativ zu dem Befestigungselement an das Befestigungselement anzubinden. Dadurch können vorteilhaft eine kurze Montagezeit sowie ein hohes Maß an Flexibilität erreicht werden.

Zudem wird vorgeschlagen, dass das Kopfstützelement entgegen der Vertikalrichtung einen sich verjüngenden Verlauf aufweist. Insbesondere ist der sich verjüngende Verlauf in befestigtem Zustand in Richtung der Nackenstützeinheit ausgerichtet. Insbesondere weist das Kopfstützelement in einem von der Nackenstützeinheit bezüglich der Vertikalrichtung abgewandten oberen Bereich eine größere Quererstreckung auf als in dem bezüglich der Vertikalrichtung der Nackenstützeinheit zugewandten unteren Bereich.

Weiterhin wird vorgeschlagen, dass die Kopfstützeinheit mit der Nackenstützeinheit in der Vertikalebene drehbar gelagert ist. Insbesondere existiert zumindest eine Drehachse, die zumindest im Wesentlichen senkrecht zu der Vertikalebene ausgerichtet ist, um die die Kopfstützeinheit in der Vertikalebene drehbar gelagert ist. Beispielsweise könnte die Drehachse durch ein Zentrum, insbesondere durch einen Schwerpunkt, der Anbindungseinheit und/oder der Kopfstützeinheit verlaufen. Alternativ sind weitere, einem Fachmann als sinnvoll erscheinende Verläufe der Drehachse denkbar.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Flugzeugsitz in einer schematischen Seitenansicht,
- Fig. 2: einen Ausschnitt eines erfindungsgemäßen Flugzeugsitzes mit einer erfindungsgemäßen Flugzeugsitzvorrichtung in einer schematischen Darstellung von vorne,
- Fig. 3: einen Ausschnitt des erfindungsgemäßen Flugzeugsitzes aus Fig. 2 in einer schematischen Darstellung von hinten, wobei eine Rückenlehne der Übersichtlichkeit halber nicht dargestellt ist,
- Fig. 4: einen Ausschnitt des erfindungsgemäßen Flugzeugsitzes aus Fig. 2 in einer schematischen Seitenansicht in einem ersten Verschiebungszustand,
- Fig. 5: einen Ausschnitt des erfindungsgemäßen Flugzeugsitzes aus Fig. 2 in einer schematischen Seitenansicht in einem zweiten Verschiebungszustand und
- Fig. 6: einen Ausschnitt einer erfindungsgemäßen Kopfstützeinheit in einer Draufsicht.

### Beschreibung der Ausführungsbeispiele

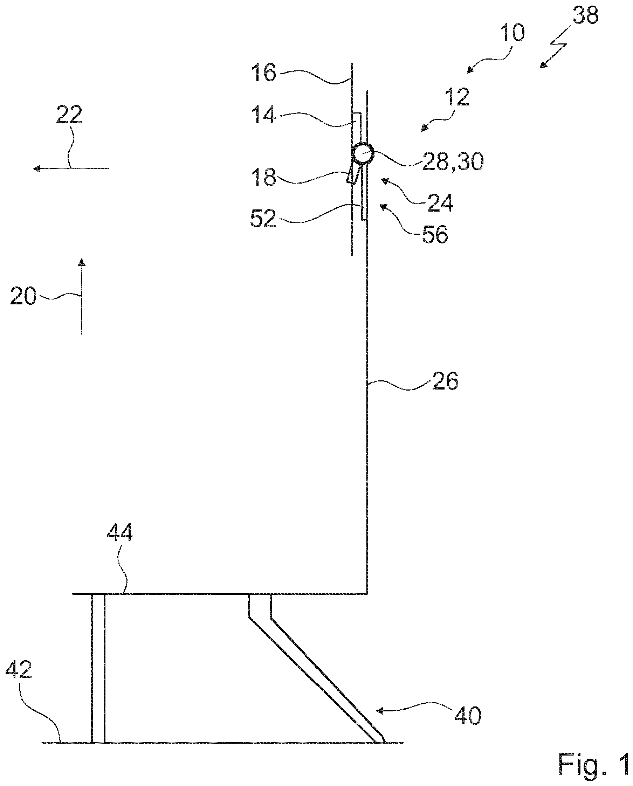

Fig. 1 zeigt einen erfindungsgemäßen Flugzeugsitz 38 mit einer erfindungsgemäßen Flugzeugsitzvorrichtung 10, die in aufrechter Sitzstellung bezüglich einer Vertikalrichtung 20 einen oberen Bereich des Flugzeugsitzes 38 ausbildet. Der Flugzeugsitz 38 umfasst eine Aufständereinheit 40 zu einer Aufständerung des Flugzeugsitzes 38 auf einem Boden 42 einer Passagierkabine. Zudem umfasst der Flugzeugsitz 38 einen Sitzboden 44, der eine Sitzfläche für einen Passagier ausbildet. Der Sitzboden 44 ist an der Aufständereinheit 40 montiert. An der Aufständereinheit 40 ist zudem die Flugzeugsitzvorrichtung 10 montiert. Die Flugzeugsitzvorrichtung 10 weist eine Rückenlehne 26 auf, die an der Aufständereinheit 40 montiert ist. Hierbei ist die Rückenlehne 26 relativ zu dem Sitzboden 44 beweglich an der Aufständereinheit 40 montiert. Die Flugzeugsitzvorrichtung 10 weist eine Kopfstützeinheit 12 auf, die bezüglich der Vertikalrichtung 20 beweglich an die Rückenlehne 26 angebunden ist.

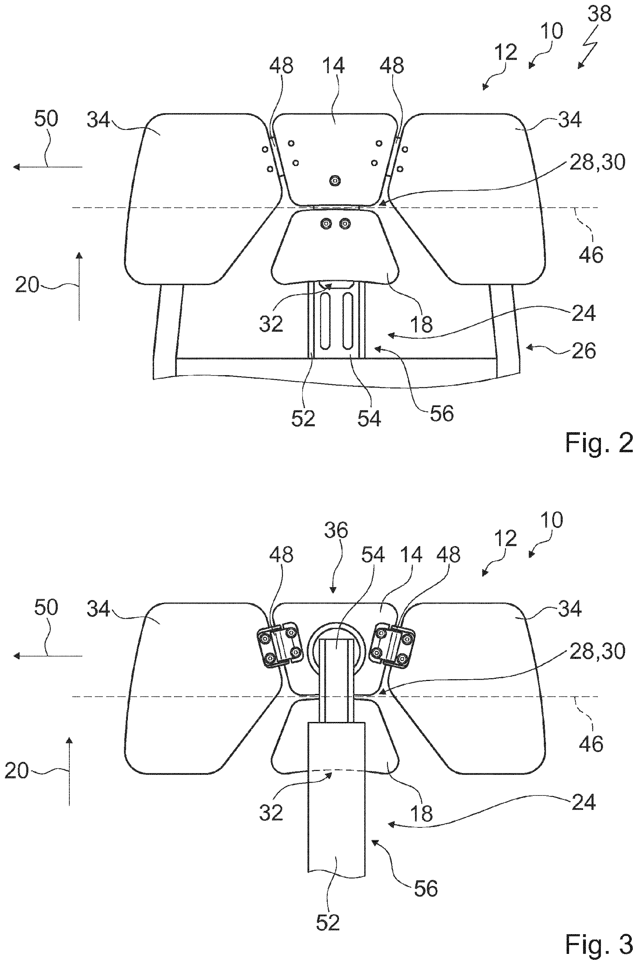

Die Kopfstützeinheit 12 weist ein Kopfstützelement 14 auf, das zu einer Abstützung eines Hinterkopfs eines Passagiers vorgesehen ist (vgl. Fig. 2 und Fig. 4 bis 6). Das Kopfstützelement 14 ist in einem mittleren Teilbereich im Wesentlichen eben ausgebildet und in aufrechter Sitzstellung im Wesentlichen parallel zu der Vertikalrichtung 20 ausgerichtet. Alternativ ist denkbar, dass das Kopfstützelement 14 insbesondere mehrfach gekrümmt und/oder konturiert ausgebildet ist. In aufrechter Sitzstellung spannt das Kopfstützelement 14 eine Vertikalebene 16 auf (vgl. Fig. 1). Die Vertikalebene 16 ist in aufrechter Sitzstellung im Wesentlichen senkrecht zu dem Boden 42 ausgerichtet. Die Kopfstützeinheit 12 weist eine Nackenstützeinheit 18 auf, die in aufrechter Sitzstellung bezüglich der Vertikalrichtung 20 an einem unteren Bereich des Kopfstützelements 14 angeordnet ist. Die Nackenstützeinheit 18 ist relativ zu dem Kopfstützelement 14 in einer im Wesentlichen senkrecht zu der Vertikalebene 16 ausgerichteten Bewegungsrichtung 22 bewegbar. Hierbei ist denkbar, dass die Nackenstützeinheit 18 zumindest ein Luftpolster aufweist und dazu vorgesehen ist, durch ein Aufpumpen des Luftpolsters eine Erstreckung relativ zu dem Kopfstützelement 14 und bezüglich der Bewegungsrichtung 22 zu verändern. Beispielsweise könnten zu einem Aufpumpen ein Handblasebalg und/oder eine Pumpe vorgesehen sein. Alternativ ist denkbar, dass die Nackenstützeinheit 18 relativ zu dem Kopfstützelement 14 mittels wenigstens eines Federelements vorgespannt ist.

Im vorliegenden Ausführungsbeispiel weist die Kopfstützeinheit 12 eine Gelenkeinheit 28 zu einer schwenkbaren Lagerung der Nackenstützeinheit 18 an dem Kopfstützelement 14 auf. Die Gelenkeinheit 28 bindet die Nackenstützeinheit 18 schwenkbar an dem Kopfstützelement 14 an. Hierbei bildet die Gelenkeinheit 28 eine Schwenkachse 46 aus, die zwischen dem Kopfstützelement 14 und der Nackenstützeinheit 18 im Wesentlichen parallel zu einer Horizontalrichtung 50 verläuft. Die Horizontalrichtung 50 ist im Wesentlichen senkrecht zu der Vertikalrichtung 20 und im Wesentlichen senkrecht zu der Bewegungsrichtung 22 ausgerichtet. Die Nackenstützeinheit 18 ist um die Schwenkachse 46 an dem Kopfstützelement 14 schwenkbar angebunden und bezüglich der Bewegungsrichtung 22 bewegbar. Die Schwenkachse 46 ist im Wesentlichen senkrecht zu der Vertikalrichtung 20 und im Wesentlichen parallel zu der Vertikalebene 16 ausgerichtet. Die Kopfstützeinheit 12 weist eine Fixiereinheit 30 auf, die dazu vorgesehen ist, die Gelenkeinheit 28 in mehreren verschiedenen Stellungen zu fixieren. Hierbei ist die Fixiereinheit 30 dazu vorgesehen, die Gelenkeinheit 28 stufenlos einstellbar zu fixieren. Die Fixiereinheit 30 umfasst ein Reibgelenk, mittels dessen eine eingestellte Stellung der Gelenkeinheit 28 aufgrund einer mechanischen Reibkraft gehalten wird. Die Fixiereinheit 30 und die Gelenkeinheit 28 sind einstückig ausgebildet. Die Gelenkeinheit 28 ist als ein Scharnier ausgebildet. Alternativ ist denkbar, dass die Gelenkeinheit 28 als eine Klappe ausgebildet ist. Ebenfalls denkbar ist, dass die Nackenstützeinheit 18 und das Kopfstützelement 14 einstückig in Form eines einzigen Spritzgussteils mit einer darin integrierten Gelenkeinheit ausgebildet sind, wobei beispielsweise für das Spritzgussteil ein flexibles Material verwendet werden könnte.

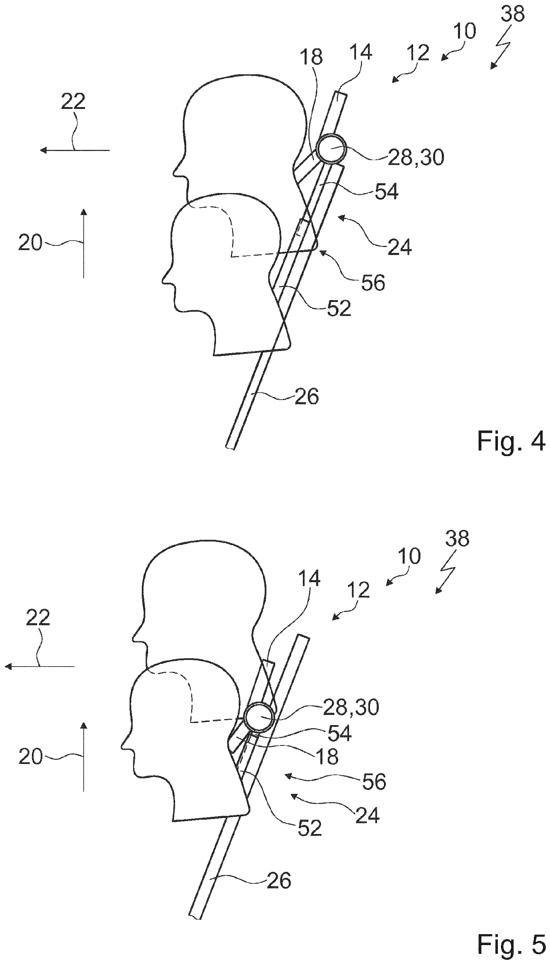

Die Nackenstützeinheit 18 weist eine in montiertem Zustand dem Kopfstützelement 14 zuweisende Ausformung 32 auf, die eine im Wesentlichen bogenartige Gestalt aufweist. Die Ausformung 32 ist in einem bezüglich der Vertikalrichtung 20 unteren Bereich der Nackenstützeinheit 18 angeordnet. Hierbei weist die bogenartige Gestalt der Ausformung 32 in Richtung des Kopfstützelements 14. Zudem weist die bogenartige Gestalt der Ausformung 32 in Richtung der Vertikalrichtung 20. Die Nackenstützeinheit 18 kommt bei einer Schwenkbewegung in Bewegungsrichtung 22 in dem unteren Bereich mit der Ausformung 32 mit einem Nacken eines Passagiers in Kontakt (vgl. Fig. 4 und Fig. 5). Durch die bogenartige Gestalt der Ausformung 32 ist die Nackenstützeinheit 18 in dem unteren Bereich an eine ergonomische Form des Nackens des Passagiers angepasst. Das Kopfstützelement 14 weist entgegen der Vertikalrichtung 20 einen sich verjüngenden Verlauf auf, der auf die Nackenstützeinheit 18 zuläuft.

Die Kopfstützeinheit 12 weist zwei Kopfstützflügel 34 auf. Die Kopfstützflügel 34 sind jeweils an dem Kopfstützelement 14 angeordnet. Hierzu weist die Kopfstützeinheit 12 zwei Lagereinheiten 48 auf. Jede der Lagereinheiten 48 bindet einen der Kopfstützflügel 34 an das Kopfstützelement 14 an. Jede der Lagereinheiten 48 ist einem der Kopfstützflügel 34 zugeordnet. Hierbei sind die beiden Kopfstützflügel 34 an zwei einander bezüglich der Horizontalrichtung 50 gegenüberliegenden Seiten des Kopfstützelements 14 angeordnet. Die Kopfstützflügel 34 sind bezüglich der Bewegungsrichtung 22 bewegbar relativ zu dem Kopfstützelement 14. Die Lagereinheiten 48 sind dazu vorgesehen, die Kopfstützflügel 34 schwenkbar an dem Kopfstützelement 14 anzubinden. Die Lagereinheiten 48 umfassen jeweils ein Reibgelenk und sind dazu vorgesehen, die Kopfstützflügel 34 in mehreren Stellungen zu fixieren. Alternativ zu den Lagereinheiten 48 ist denkbar, dass die Kopfstützflügel 34 einstückig mit dem Kopfstützelement 14 ausgebildet sind.

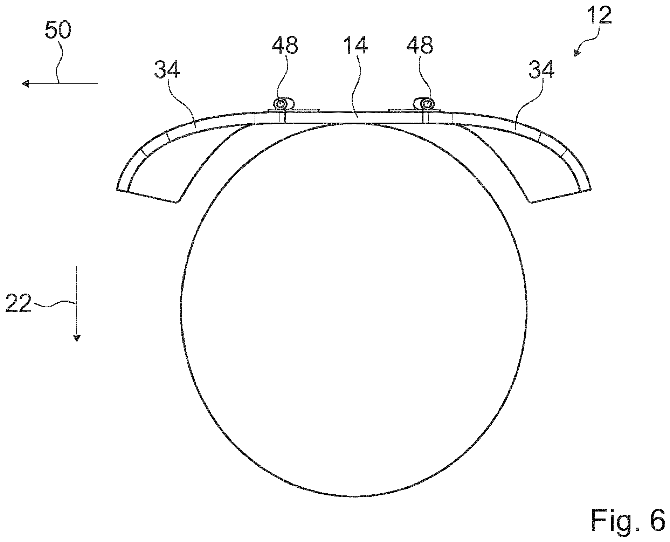

In angeklappter Stellung der Kopfstützflügel 34 an dem Kopfstützelement 14 sind die Kopfstützflügel 34 teilweise in der Vertikalebene 16 angeordnet (vgl. Fig. 2 und Fig. 3). Hierbei sind die Kopfstützflügel 34 mit einem dem Kopfstützelement 14 bezüglich der Horizontalrichtung 50 zuweisenden Teilbereich in der Vertikalebene 16 angeordnet. Ein von dem Kopfstützelement 14 bezüglich der Horizontalrichtung 50 wegweisender Teilbereich der Kopfstützflügel 34 ist jeweils außerhalb der Vertikalebene 16 angeordnet. Hierbei sind die von dem Kopfstützelement 14 bezüglich der Horizontalrichtung 50 wegweisenden Teilbereiche der Kopfstützflügel 34 bezüglich der Bewegungsrichtung 22 vor der Vertikalebene 16 angeordnet. In dem von dem Kopfstützelement 14 bezüglich der Horizontalrichtung 50 wegweisenden Teilbereich weist jeder der Kopfstützflügel 34 bezüglich der Bewegungsrichtung zwei differierende Erstreckungen auf. Hierbei weist jeder der Kopfstützflügel 34 eine konturierte Gestalt auf. Jeder der Kopfstützflügel 34 weist einen sich bezüglich der Vertikalrichtung 20 nach unten erstreckenden, in der Bewegungsrichtung ausgerichteten gewölbten Verlauf auf. Dieser gewölbte Verlauf der Kopfstützflügel 34 ist an eine Gestalt eines Kopfs eines Passagiers angepasst, wodurch ein hoher Komfort erreicht wird. In angeklappter Stellung der Kopfstützflügel 34 und der Nackenstützeinheit 18 an das Kopfstützelement 14 weist die Kopfstützeinheit 12 in einer Draufsicht eine im Wesentlichen bogenartige Gestalt auf (vgl. Fig. 6).

Die Kopfstützflügel 34 schließen bezüglich der Vertikalrichtung 20 mit dem Kopfstützelement 14 im Wesentlichen bündig ab. Hierbei ist bezüglich der Vertikalrichtung 20 ein jeweiliger oberer Bereich eines der Kopfstützflügel 34 bündig mit einem oberen Bereich des Kopfstützelements 14 angeordnet. Zudem schließen die Kopfstützflügel 34 in montiertem Zustand bezüglich der Vertikalrichtung 20 mit der Nackenstützeinheit 18 im Wesentlichen bündig ab. Hierbei ist bezüglich der Vertikalrichtung 20 ein jeweiliger unterer Bereich eines der Kopfstützflügel 34 bündig mit einem unteren Bereich der Nackenstützeinheit 18 angeordnet.

Die Flugzeugsitzvorrichtung 10 weist eine Anbindungseinheit 24 auf, die dazu vorgesehen ist, die Kopfstützeinheit 12 zusammen mit der Nackenstützeinheit 18 bezüglich der Vertikalrichtung 20 beweglich an die Rückenlehne 26 anzubinden. Die Anbindungseinheit 24 ist teilweise an der Rückenlehne 26 angeordnet. Hierbei weist die Anbindungseinheit 24 ein Befestigungselement 52 zur starren Befestigung an der Rückenlehne 26 auf, mit der das Kopfstützelement 14 einen Winkel einschließt, der im Wesentlichen konstant ist.

Hierbei ist das Befestigungselement 52 im Wesentlichen parallel zu der von dem Kopfstützelement 14 aufgespannten Vertikalebene 16 ausgerichtet. Die Anbindungseinheit 24 weist ein Führungselement 54 zu einer Anbindung an die Kopfstützeinheit 12 auf. Das Führungselement 54 und das Befestigungselement 52 sind in montiertem Zustand aneinander gekoppelt. Das Führungselement 54 ist relativ zu dem starr mit der Rückenlehne 26 verbundenen Befestigungselement 52 bewegbar. Hierbei ist das Führungselement 54 teleskopartig in dem Befestigungselement 52 gelagert.

Das Führungselement 54 und das Befestigungselement 52 binden die Kopfstützeinheit 12 bezüglich der Vertikalrichtung 20 beweglich an die Rückenlehne 26 an. Die Kopfstützeinheit 12 ist bezüglich der Vertikalrichtung 20 um eine Strecke von im Wesentlichen 15 cm beweglich. In Fig. 4 und Fig. 5 sind bezüglich der Vertikalrichtung 20 jeweilige als Endpositionen ausgebildete Verschiebungszustände der Kopfstützeinheit 12 dargestellt. Die Anbindungseinheit 24 weist eine weitere Fixiereinheit 56 auf, die dazu vorgesehen ist, das Führungselement 54 in mehreren verschiedenen, relativ zu dem Befestigungselement 52 verschobenen Verschiebungszuständen zu fixieren. Die weitere Fixiereinheit 56 ist dazu vorgesehen, das Führungselement 54 in mehreren Verschiebungszuständen in dem Befestigungselement 52 zu verrasten. Alternativ wäre eine Fixierung mittels Reibung denkbar. Zudem sind weitere, einem Fachmann als sinnvoll erscheinende Ausgestaltungen der weiteren Fixiereinheit 56 denkbar.

Die Anbindungseinheit 24 weist eine Schnellkupplung 36 auf, die zu einer werkzeuglosen Anbindung der Kopfstützeinheit 12 an das Befestigungselement 52 vorgesehen ist. Die Schnellkupplung 36 ist teilweise an dem Führungselement 54 angeordnet. Hierbei weist die Schnellkupplung 36 ein Kopplungselement auf, das bezüglich der Vertikalrichtung 20 in einem oberen Bereich des Führungselements 54 angeordnet ist. Zudem ist die Schnellkupplung 36 teilweise an dem Kopfstützelement 14 angeordnet. Hierbei weist die Schnellkupplung 36 ein Kopplungselement auf, das an dem Kopfstützelement 14 angeordnet ist. Somit ist die Anbindungseinheit 24 teilweise an dem Kopfstützelement 14 angeordnet. Die Schnellkupplung 36 weist einen Rastmechanismus auf, der dazu vorgesehen ist, die Kopfstützeinheit 12 mit dem Befestigungselement 52 zu verrasten. Das an dem Kopfstützelement 14 angeordnete Kopplungselement der Schnellkupplung 36 ist als eine Ausnehmung ausgebildet und das an dem Führungselement 54 angeordnete Kopplungselement der Schnellkupplung 36 ist als ein Vorsprung ausgebildet. Alternativ könnte das an dem Kopfstützelement 14 angeordnete Kopplungselement der Schnellkupplung 36 als ein Vorsprung und das an dem Führungselement 54 angeordnete Kopplungselement der Schnellkupplung 36 als eine Ausnehmung ausgebildet sein. Zudem sind weitere, einem Fachmann als sinnvoll erscheinende Ausgestaltungen der Schnellkupplung 36 denkbar.

Die Kopfstützeinheit 12 umfasst eine Polsterung (nicht dargestellt), die sich über im Wesentlichen die gesamte Kopfstützeinheit 12 erstreckt. Hierbei ist die Polsterung einstückig ausgebildet. Alternativ ist denkbar, dass die Nackenstützeinheit 18, das Kopfstützelement 14 und/oder die Kopfstützflügel 34 jeweils eine eigene Polsterung umfassen. Zusätzlich ist denkbar, dass die Kopfstützeinheit 12 mit der Nackenstützeinheit 18 in der Vertikalebene 16 drehbar gelagert ist.

In einem Verfahren zu einer Montage der Flugzeugsitzvorrichtung 10 wird zunächst das Befestigungselement 52 an der Rückenlehne 26 befestigt. Anschließend wird das Führungselement 54 mit dem an dem Führungselement 54 angeordneten Kopplungselement der Schnellkupplung 36 mit dem Befestigungselement 52 verbunden. In aufrechter Sitzstellung wird die Kopfstützeinheit 12 mit dem an dem Kopfstützelement 14 angeordneten Kopplungselement der Schnellkupplung 36 in einer im Wesentlichen parallel zu der Vertikalebene 16 ausgerichteten Ebene um einen Winkel von im Wesentlichen 60° gedreht. Anschließend werden die beiden Kopplungselemente der Schnellkupplung 36 durch eine Bewegung entgegen der Bewegungsrichtung 22 in Eingriff gebracht. Durch eine Drehung der Kopfstützeinheit 12 mit dem an dem Kopfstützelement 14 angeordneten Kopplungselement der Schnellkupplung 36 in der im Wesentlichen parallel zu der Vertikalebene 16 ausgerichteten Ebene um einen Winkel von im Wesentlichen 60° wird die Kopfstützeinheit 12 an die Rückenlehne 26 werkzeuglos angebunden.

In einem alternativen Ausführungsbeispiel könnte die Nackenstützeinheit als eine Bespannung zwischen zwei unteren Bereichen der Kopfstützflügel gebildet sein. Ebenfalls denkbar ist, dass die Kopfstützeinheit teilweise, insbesondere vollständig mit einer Bespannung versehen ist. Alternativ zu einer Anbindung der Nackenstützeinheit an dem Kopfstützelement mittels der Gelenkeinheit ist denkbar, dass die Nackenstützeinheit an wenigstens einem der Kopfstützflügel angebunden ist, wobei bei einer Bewegung des Kopfstützflügels in der Bewegungsrichtung die Nackenstützeinheit ebenfalls in der Bewegungsrichtung bewegt wird. Weiterhin ist vorstellbar, dass die Nackenstützeinheit und das Kopfstützelement einstückig ausgebildet sind, wobei eine mehrgliedrige Ausgestaltung denkbar wäre, wie beispielsweise bei einem Rollladen.

### Bezugszeichen

- 10: Flugzeugsitzvorrichtung
- 12: Kopfstützeinheit
- 14: Kopfstützelement
- 16: Vertikalebene
- 18: Nackenstützeinheit
- 20: Vertikalrichtung
- 22: Bewegungsrichtung
- 24: Anbindungseinheit
- 26: Rückenlehne
- 28: Gelenkeinheit
- 30: Fixiereinheit
- 32: Ausformung
- 34: Kopfstützflügel
- 36: Schnellkupplung
- 38: Flugzeugsitz
- 40: Aufständereinheit
- 42: Boden
- 44: Sitzboden
- 46: Schwenkachse
- 48: Lagereinheit
- 50: Horizontalrichtung
- 52: Befestigungselement
- 54: Führungselement
- 56: weitere Fixiereinheit

## Patentansprüche

1. Flugzeugsitzvorrichtung mit zumindest einer Kopfstützeinheit (12), die zumindest ein Kopfstützelement (14), das zumindest zu einer Abstützung eines Hinterkopfs eines Passagiers vorgesehen ist und zumindest eine Vertikalebene (16) aufspannt, und zumindest eine Nackenstützeinheit (18) aufweist, die bezüglich einer Vertikalrichtung (20) an einem unteren Bereich des Kopfstützelements (14) angeordnet und relativ zu dem Kopfstützelement (14) zumindest in einer zumindest im Wesentlichen senkrecht zu der Vertikalebene (16) ausgerichteten Bewegungsrichtung (22) bewegbar ist, und mit zumindest einer Anbindungseinheit (24), die dazu vorgesehen ist, die Kopfstützeinheit (12) zusammen mit der Nackenstützeinheit (18) zumindest bezüglich der Vertikalrichtung (20) beweglich an eine Rückenlehne (26) anzubinden, wobei die Kopfstützeinheit (12) zwei Kopfstützflügel (34) aufweist, wobei die Kopfstützflügel (34) jeweils an dem Kopfstützelement (14) angeordnet sind, und die Kopfstützeinheit (12) zwei Lagereinheiten (48) aufweist, wobei jede der Lagereinheiten (48) einen der Kopfstützflügel (34) an das Kopfstützelement (14) anbindet, und wobei die Kopfstützeinheit (12) zumindest eine Gelenkeinheit (28) zu einer schwenkbaren Lagerung der Nackenstützeinheit (18) an dem Kopfstützelement (14) aufweist, **dadurch gekennzeichnet, dass** die zwei Kopfstützflügel (34) in montiertem Zustand bezüglich der Vertikalrichtung (20) mit der Nackenstützeinheit (18) bündig abschließen.

2. Flugzeugsitzvorrichtung nach Anspruch 1, **dadurch gekennzeichnet, dass** die Kopfstützeinheit (12) zumindest eine Fixiereinheit (30) aufweist, die dazu vorgesehen ist, die Gelenkeinheit (28) in zumindest zwei verschiedenen Stellungen zu fixieren.

3. Flugzeugsitzvorrichtung nach einem der vorhergehenden Ansprüche, **dadurch gekennzeichnet, dass** die Kopfstützeinheit (12) bezüglich der Vertikalrichtung (20) um eine Strecke von mehr als 10 cm beweglich ist.

4. Flugzeugsitzvorrichtung nach einem der vorhergehenden Ansprüche, **dadurch gekennzeichnet, dass** die Anbindungseinheit (24) zumindest teilweise an dem Kopfstützelement (14) angeordnet ist.

5. Flugzeugsitzvorrichtung zumindest nach Anspruch 1, **dadurch gekennzeichnet, dass** die Anbindungseinheit (24) zumindest eine Schnellkupplung (36) aufweist, die zu einer werkzeuglosen Anbindung der Kopfstützeinheit (12) an ein Befestigungselement (52) der Anbindungseinheit (24) vorgesehen ist.

6. Flugzeugsitz mit zumindest einer Flugzeugsitzvorrichtung (10) nach einem der vorhergehenden Ansprüche 1 bis 5.

## Claims

1. Aircraft seat device with at least one headrest unit (12) comprising at least one headrest element (14), which is configured at least to support the back of a passenger's head and spans at least one vertical plane (16), and comprising at least one neck support unit (18), which is arranged in a lower region of the headrest element (14) with respect to a vertical direction (20) and is movable relative to the headrest element (14) at least in a movement direction (22) which is oriented at least substantially perpendicularly to the vertical plane (16), and comprising at least one connection unit (24), which is configured to connect the headrest unit (12), together with the neck support unit (18), to a backrest (26) movably at least relative to the vertical direction (20), wherein the headrest unit (12) comprises two headrest wings (34), wherein the headrest wings (34) are respectively arranged on the headrest element (14) and the headrest unit (12) comprises two support units (48), wherein each of the support units (48) connects one of the headrest wings (34) to the headrest element (14), and wherein the headrest unit (12) comprises at least one articulation unit (28) for a pivotable support of the neck support unit (18) on the headrest element (14),
**characterised in that**
in a mounted state, the two headrest wings (34) end flush with the neck support unit (18) relative to the vertical direction (20).

2. Aircraft seat device according to claim 1, **characterised in that** the headrest unit (12) comprises at least one fixation unit (30), which is configured to fixate the articulation unit (28) in at least two different positions.

3. Aircraft seat device according to one of the preceding claims, **characterised in that** the headrest unit (12) is movable relative to the vertical direction (20) by a distance of more than 10 cm.

4. Aircraft seat device according to one of the preceding claims, **characterised in that** the connection unit (24) is arranged at least partly on the headrest element (14).

5. Aircraft seat device at least according to claim 1, **characterised in that** the connection unit (24) comprises at least one rapid coupling (36), which is configured for a toolless connection of the headrest unit (12) on a fixation element (52) of the connection unit (24).

6. Aircraft seat with at least one aircraft seat device (10) according to one of the preceding claims 1 to 5.

## Revendications

1. Dispositif de siège d'avion avec au moins une unité appui-tête (12) comprenant au moins un élément appui-tête (14), lequel est prévu pour un appui d'une arrière-tête d'un passager et étend au moins un plan vertical (16), et comprenant au moins une unité appui-nuque (18), laquelle est disposée, relativement à une direction verticale (20), dans une région inférieure de l'élément appui-tête (14) et est mobile relativement à l'élément appui-tête (14) au moins dans une direction de mouvement (22) orientée au moins sensiblement perpendiculairement au plan vertical (16), et avec au moins une unité à raccordement (24) prévue pour raccorder l'unité appui-tête (14), avec l'unité appui-nuque (18), à un dossier (26) de telle manière qu'elles sont mobiles au moins relativement à la direction verticale (20),
l'unité appui-tête (12) comprenant deux ailes appui-tête (34),
chacune des ailes appui-tête (34) étant disposée à l'élément appui-tête (14) et l'unité appui-tête (12) comprenant deux unités de support (48),
chacune des unités de support (48) raccordant une des ailes appui-tête (34) à l'élément appui-tête (14), et
l'unité appui-tête (12) comportant au moins une unité d'articulation (28) pour un support pivotant de l'unité appui-nuque (18) à l'élément appui-tête (14), **caractérisé en ce qu'**
en état assemblé les deux ailes appui-tête (34) se terminent à fleur avec l'unité appui-nuque (18) relativement à la direction verticale (20).

2. Dispositif de siège d'avion selon la revendication 1, **caractérisé en ce que** l'unité appui-tête (12) comporte au moins une unité à fixation (30), laquelle est prévue pour fixer l'unité d'articulation (28) dans au moins deux positions différentes.

3. Dispositif de siège d'avion selon l'une quelconque des revendications précédentes, **caractérisé en ce que** l'unité appui-tête (12) est mobile relativement à la direction verticale (20) par une distance de plus que 10 cm.

4. Dispositif de siège d'avion selon l'une quelconque des revendications précédentes, **caractérisé en ce que** l'unité à raccordement (24) est disposée au moins partiellement à l'élément appui-tête (14).

5. Dispositif de siège d'avion au moins selon la revendication 1, **caractérisé en ce que** l'unité à raccordement (24) comporte au moins un couplage rapide (36), lequel est prévu pour un raccordement sans outil de l'unité appui-tête 12) à un élément de fixation (52) de l'unité à raccordement (24).

6. Siège d'avion avec au moins un dispositif de siège d'avion (10) selon l'une quelconque des revendications précédentes 1 à 5.
